# EUROPÄISCHE PATENTSCHRIFT

(11) **EP 4 201 192 B1**
(45) Veröffentlichungstag und Bekanntmachung des Hinweises auf die Patenterteilung: **24.04.2024**
(21) Anmeldenummer: 22000044.2
(22) Anmeldetag: 01.03.2022
(51) Int. Cl.: A01D 90/08, B60J 5/06, B60P 7/135, B60P 7/12

(54) **LADUNGSSICHERUNGSVORRICHTUNG FÜR LANDWIRTSCHAFTLICHE TRANSPORTWAGEN**
LOAD SECURING DEVICE FOR AGRICULTURAL WAGONS
DISPOSITIF D'ARRIMAGE DU CHARGEMENT POUR WAGONS AGRICOLES

(30) Priorität: 27.12.2021 DE 202021003877 U
(43) Veröffentlichungstag der Anmeldung: 28.06.2023
(73) Patentinhaber: Demmler GmbH & Co. KG - Fahrzeug- und Karosseriebau, 86637 Wertingen-Geratshofen (DE)
(72) Erfinder: Demmler, Johann, 86637 Gottmannshofen (DE); Baindl, Andreas, 86502 Laugna (DE)
(74) Vertreter: Fleuchaus & Gallo Partnerschaft mbB

(56) Entgegenhaltungen:
- DE-U1-202013 005 936
- DE-U1-202015 005 847

## Beschreibung

Die Erfindung betrifft eine Ladungssicherungsvorrichtung für landwirtschaftliche Transportwagen, insbesondere für Ballentransportwagen zum Transport beispielsweise von Strohballen oder Heuballen, die in Gestalt von Rundballen oder in Gestalt von Quaderballen vorliegen können, wobei aber auch andere stückige Transportgüter in Betracht kommen, wie beispielsweise Obstkisten.

Landwirtschaftliche Transportwagen zum Transport von gepressten Strohballen oder gerollten Heuballen oder anderem stückigen Ladegut erfordern zum Beladen eine freie Zugänglichkeit der Ladeplattform des Transportwagens von mindestens einer Seite her. Ein das Ladegut auf der betreffenden Seite der Ladeplattform sicherndes Längsseitenwandelement des Transportwagens muss daher zwischen einer Sicherungsposition und einer Position bewegbar sein, in welcher es die Zugänglichkeit der Ladeplattform von der betreffenden Seite her nicht behindert.

Aus der DE 10 2007 020 735 A1 ist es bekannt, an einem solchen Transportwagen jeweils eine festsehende vordere und hintere Stirnwand vorzusehen und an den Längsseiten rahmengitterartige Längsseitenwände vorzusehen, die mittels hydraulischer, an den Stirnwänden angeordneter Hubelemente zwischen einer abgesenkten Stellung, in welcher die Ladeplattform von der betreffenden Seite her frei zugänglich ist, und einer angehobenen und gegen das Ladegut hin geschwenkten Sicherungsstellung bewegbar sind.

Aus der DE 20 2013 008 198 U1 ist eine ähnliche Anordnung bekannt, wobei allerdings die rahmengitterartigen Längsseitenwände nicht nach unten abklappbar sind, sondern zum Herstellen der Zugänglichkeit der Ladeplattform von der Seite her nach oben schwenkbar sind und nach dem Beladen in die Sicherungsstellung abklappbar sind.

Aus der gattungsgemäßen DE 20 2015 005 847 U1 ist eine Ladungssicherungsvorrichtung für derartige landwirtschaftliche Transportwagen bekannt, bei welcher zur Ladungssicherung an mindestens einer Längsseite des Transportwagens anstatt einer rahmengitterartigen und damit insgesamt starren Längsseitenwand eine flexible Längsseitenwand vorgesehen ist, die aus einem sich über die Längsseitenlänge erstreckenden, als Spannstange dienenden Balken und einer Anzahl von über die Längsseitenlänge verteilt angeordneten flexiblen Gurten besteht, die zwischen dem Balken und einer unterhalb der Ladefläche der Ladeplattform befindlichen Verankerungsstelle verlaufen. Der Balken ist zwischen einer angehobenen Spannstellung, in welcher die Spanngurte eine den Laderaum seitlich abschließende flexible Seitenwand bilden, und einer abgesenkten Stellung unterhalb der Ladefläche der Ladeplattform bewegbar.

Bei dieser letzteren bekannten Ladungssicherungsvorrichtung ist das starre Längsseitenwandelement im Gegensatz zu den sich über eine beträchtliche Höhe erstreckenden rahmengitterartigen Längsseitenwände der anderen bekannten Ausführungsformen auf einen schmalen Balken reduziert.

Damit überwindet die letztere bekannte Anordnung sowohl das bei einer abwärts schwenkbaren Rahmengitter-Längsseitenwand bestehende Problem, dass durch die herunter geschwenkte Rahmengitter-Längsseitenwand beim Beladen ein nahes Heranfahren an die Ladeplattform durch Hubstapler oder ähnliche Ladefahrzeuge behindert wird, als auch das bei einer nach oben schwenkbaren Rahmengitter-Längsseitenwand bestehende Problem einer Unfallgefahr, wenn die hochgeschwenkte Längsseitenwand aufgrund eines technischen Defekts oder einer Fehlbedienung herabzustürzen droht.

Aufgabe der Erfindung ist es, eine weitere Optimierung einer Ladungssicherungsvorrichtung für landwirtschaftliche Ballentransportwagen zu schaffen, insbesondere hinsichtlich erweiterter Sicherungsmöglichkeiten bei unterschiedlicher Beladung.

Diese Aufgabe wird gemäß der Erfindung durch die im Anspruch 1 angegebene Anordnung gelöst. Vorteilhafte Ausgestaltungen und Weiterbildungen der Erfindung sind Gegenstand der Unteransprüche.

Die erfindungsgemäße Anordnung nutzt die aus der DE 20 2015 005 847 U1 bekannte Reduktion eines starren Längsseitenwandelements auf einen relativ schmalen Balken, um auch bei dessen Absenkung unterhalb der Ladepritschenebene noch genug Freiraum nach unten zum Boden zu lassen, um ein teilweises Unterfahren durch seitlich heranfahrende Ladefahrzeuge ungehindert zu ermöglichen.

Darüber hinaus ermöglicht die erfindungsgemäße Anordnung aber Sicherungspositionen des Balkens in unterschiedlichen Höhenpositionen entsprechend unterschiedlichen Beladung, beispielsweise mit einer Lage oder zwei Lagen von Ballen in Gestalt von Rundballen oder Quaderballen, oder mit Kisten.

Dies wird bei der erfindungsgemäßen Anordnung dadurch erreicht, dass aufgrund entsprechender Ausbildung und Geometrie des den entlang der Längsseitenwand verlaufenden Sicherungsbalken bewegenden Betätigungsmechanismus wahlweise sowohl in eine halbhohe Sicherungsposition entsprechend etwa einer halbhohen Beladungshöhe des Ladeguts als auch in eine Sicherungsposition in voller Höhe entsprechend einer vollen Beladungshöhe des Ladeguts gebracht werden kann. Dabei kann jeweils das Ladegut durch den Sicherungsbalken auch klemmend fixiert und so gegen verrutschen gesichert werden, indem der Sicherungsbalken jeweils über die Außenkante der Ladepritsche einwärts geschwenkt werden kann.

Vorzugsweise ist ein Sicherungsbalken an beiden Längsseiten des Transportwagens vorgesehen, jedoch ist es auch möglich, eine Sicherungsbalken nur an einer Längsseite des Transportwagens vorzusehen und die andere Längsseite mit einer starren, fest angeordneten Längsseitenwand zu versehen.

Diese Verbesserung der Ladungssicherungsvorrichtung im Hinblick auf die Ladungssicherung an den Längsseiten des Transportwagens kann auch hinsichtlich der Ladungssicherung am vorderen und hinteren Wagenende noch dadurch optimiert werden, dass erfindungsgemäß die dort ortsfest angeordneten Stirnwände jeweils in einem oberen Bereich als Klappgitter ausgebildet sind, die wahlweise in eine mit Bezug auf das jeweilige Ladepritschenende ausgeschwenkte Position oder in eine eingeschwenkte, mit dem Ladepritschenende fluchtende Position geklappt werden können, um je nach Art des Ladeguts eine optimierte Beladung des Transportwagens zuzulassen, wie sich aus der folgenden Beispielsbeschreibung noch im einzelnen ergibt.

Ein Ausführungsbeispiel der Erfindung wird nachstehend unter Bezugnahme auf die anliegenden Zeichnungen mehr im einzelnen beschrieben, in denen zeigt:
- Die Figuren 1 und 2: in Frontansicht und Seitenansicht eine Stirnwand eines Ballentransportwagens mit einem Betätigungsmechanismus für beidseitig angeordnete Ladungssicherungsbalken an den Wagenlängsseiten, wobei die Sicherungsbalken in der abgesenkten Stellung dargestellt sind,
- die Figuren 3 und 4: Darstellungen ähnlich den Figuren 1 und 2, wobei ein Ladungssicherungsbalken in einer vollständig angehobenen Sicherungsstellung und der andere Ladungssicherungsbalken in der abgesenkten Stellung dargestellt ist,
- die Figuren 5 und 6: Darstellungen ähnlich den Figuren 1 und 2, wobei ein Ladungssicherungsbalken in der abgesenkten Stellung und der andere Ladungssicherungsbalken in einer auf halbe Höhe angehobenen Sicherungsstellung dargestellt ist,
- die Figuren. 7 und 8: eine Seitenansicht und eine Frontansicht des Transportwagens bei Beladung in voller Höhe mit Quaderballen,
- die Figuren 9 und 10: eine Seitenansicht und eine Frontansicht des Transportwagens bei Beladung in voller Höhe mit Rundballen, und
- die Figuren 11 und 12: eine Seitenansicht und eine Frontansicht des Transportwagens bei Beladung mit Kisten.

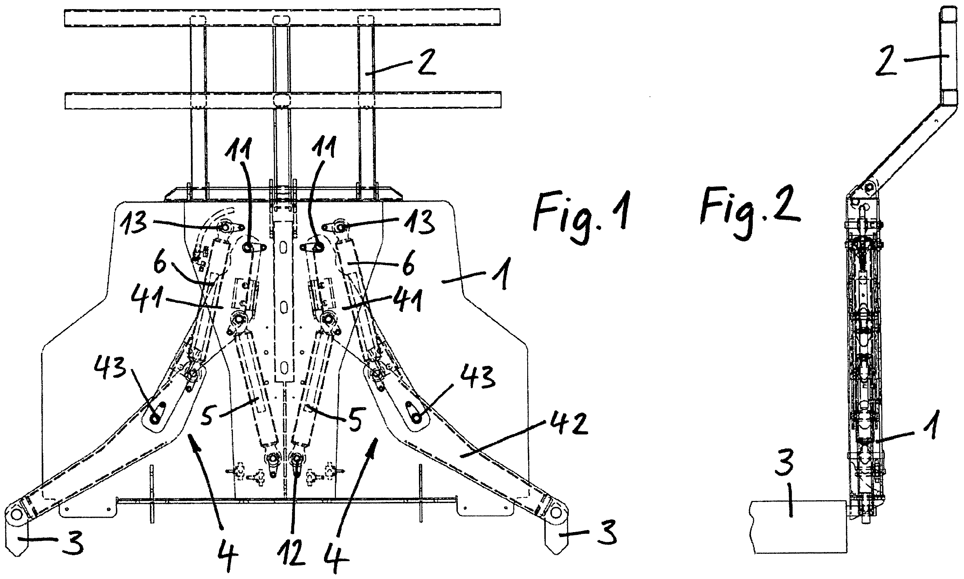

Die Figuren 1 bis 6 zeigen jeweils unter Weglassung des übrigen Transportwagens nur eine Stirnwand des Transportwagens, wie sie sowohl am vorderen als auch am hinteren Wagenende angeordnet ist, und zwar in den Figuren 1, 3 und 5 jeweils in der Ansicht von außen, und in den Figuren 2, 4 und 6 jeweils in der Seitenansicht.

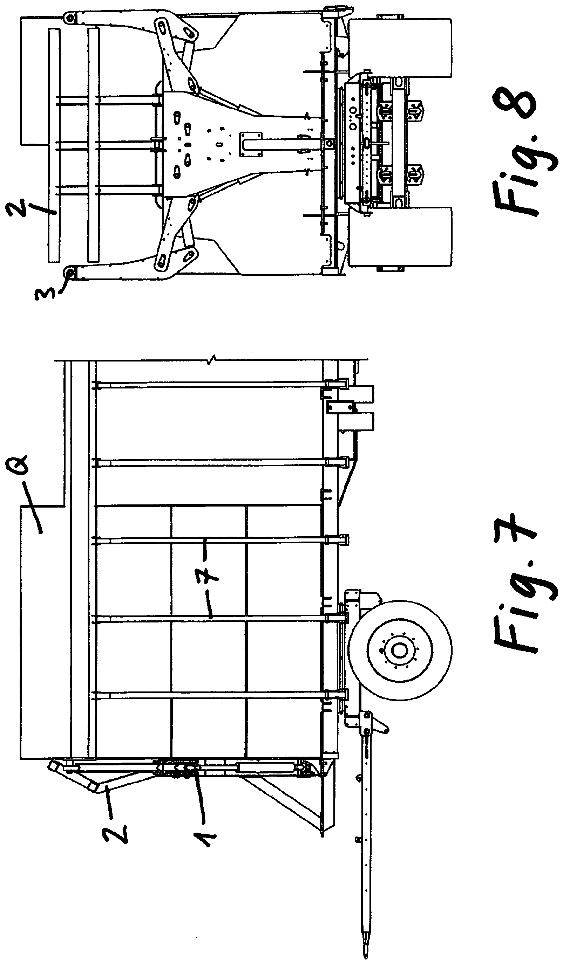

Jede Stirnwand weist einen feststehend am vorderen bzw. hinteren Ende des Transportwagens angeordneten Wandkörper 1 auf. Dieser kann sich (nicht dargestellt) über die ganze Höhe des Transportwagens erstrecken, oder in bevorzugter Ausführungsform der Erfindung, wie dargestellt, sich nur über einen Teil der Höhe des Transportwagens erstrecken, wobei sich dann an das obere Ende des Wandkörpers 1 ein klappbares Gitter 2 anschließt, dass zwischen einer eingeklappten Stellung (Figur 7) zum Transport von Quaderballen und einer ausgeklappten Stellung (Figur 8) zum Transport von Rundballen klappbar ist.

Der Wandkörper 1 bildet die Tragkonstruktion für den Betätigungsmechanismus für Sicherungsbalken 3, die beim dargestellten Ausführungsbeispiel jeweils an einer Längsseite des Transportwagens verlaufen, um die Ladung an der jeweiligen Längsseite zu sichern. Wie insbesondere aus den Seitenansichten der Stirnwand nach den Figuren 2, 4 und 6 ersichtlich ist, ist dieser Betätigungsmechanismus vorzugsweise innerhalb des Wandkörpers 1 angeordnet, der damit den Betätigungsmechanismus sowohl vor Verschmutzung als auch vor Beschädigung durch äußere mechanische Einwirkungen schützt und zugleich gegen Unfallgefahr schützt, indem der Wandkörper 1 als Gehäuse für den Betätigungsmechanismus verhindert, dass den Transportwagen benutzende Personen in irgendeiner Weise mit Körperteilen in den sich bewegenden Betätigungsmechanismus gelangen können.

Der Transportwagen kann, wie in den Zeichnungen dargestellt, an beiden Längsseiten mit einem Sicherungsbalken 3 und demzufolge mit einem doppelten Betätigungsmechanismus in jeder Stirnwand ausgebildet sein, um bei unter die Ladepritsche abgesenktem Sicherungsbalken 3 den Transportwagen von der einen oder anderen oder von beiden Seiten gleichzeitig beladen zu können. Alternativ kann ein Sicherungsbalken 3 nur an einer Längsseite des Transportwagens vorgesehen sein, wobei dann nur ein einfacher Betätigungsmechanismus vorhanden ist, während an der anderen Längsseite eine feste, beispielsweise gitterartig ausgebildete Längsseitenwand angeordnet ist.

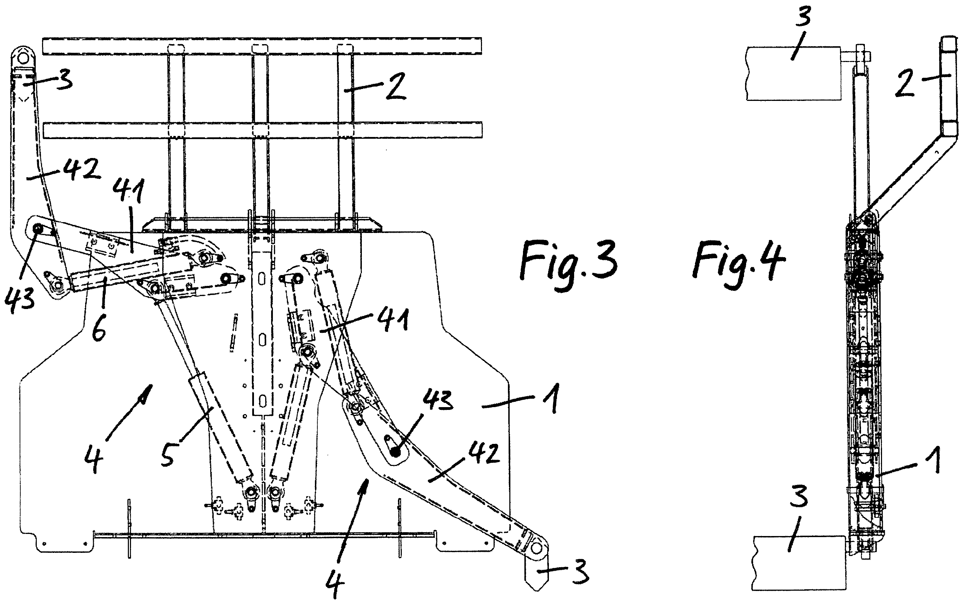

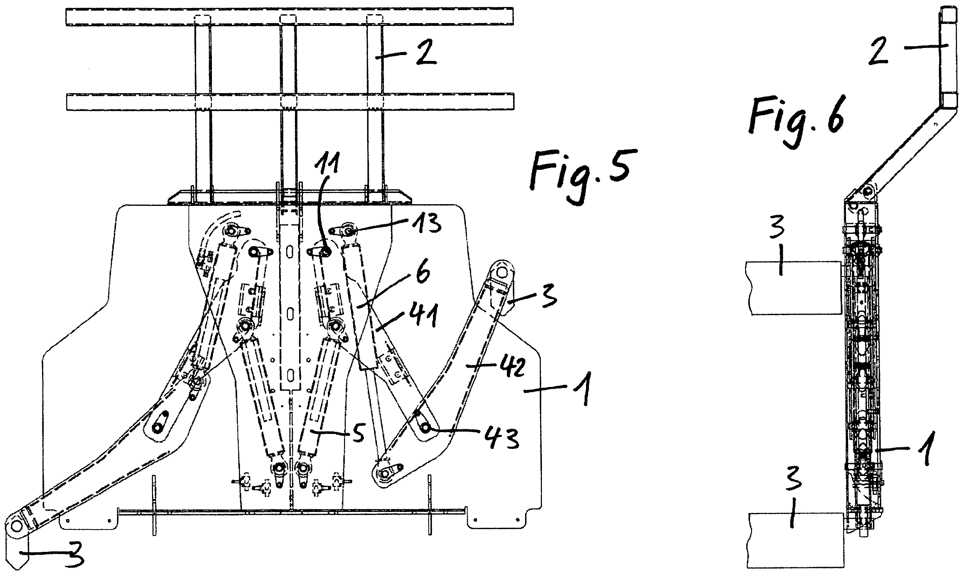

Beim dargestellten Ausführungsbeispiel ist ein Sicherungsbalken 3 an beiden Fahrzeuglängsseiten vorgesehen. In den Figuren 1 und 2 sind beide Sicherungsbalken 3 auf den beiden Längsseiten des Transportwagens in ihrer abgesenkten Position für freien Zugang zur Ladepritsche dargestellt. In den Figuren 3 und 4 befindet sich der eine Sicherungsbalken (auf der in der Stirnwandansicht rechten Transportwagenseite) in der abgesenkten Position, während sich der Sicherungsbalken 3 auf der anderen Transportwagenseite in der vollständig angehobenen Stellung befindet. In den Figuren 5 und 6 ist einer der Sicherungsbalken 3 (auf der in der Stirnwandansicht linken Seite) in der abgesenkten Position dargestellt, und der Sicherungsbalken 3 auf der anderen Transportwagenseite befindet sich in der auf halbe Höhe angehobenen Position.

Eine Bestätigungsvorrichtung für die Sicherungsbalken 3 besteht aus jeweils einem am Wandkörper 1 sowohl der vorderen Stirnwand als auch der hinteren Stirnwand des Transportwagens angeordneten Betätigungsmechanismus in Gestalt eines Gestänges, das jeweils doppelt in spiegelbildlicher Ausführung für jeden der auf beiden Seiten des Transportwagens angeordneten Sicherungsbalken 3 vorgesehen ist.

Jedes Gestänge besteht aus einem Schwenkarm 4, der seinerseits aus einem "Unterarm" 41 und einem "Oberarm" 42 besteht, die mit einem Ellbogengelenk 43 gelenkig miteinander verbunden sind. Der Oberarm 41 ist mit einem Ende über eine Anlenkstelle 11 mit dem Wandkörper 1 verbunden, und mit seinem anderen Ende mit dem Gelenk 43 zwischen Oberam 41 und Unterarm 42 des Schwenkarms 4 verbunden. Der Unterarm 42 ist an seinem freien Ende mit dem Sicherungsbalken 3 gelenkig verbunden.

Ein erster Hydraulikzylinder 5 ist mit einem Ende über eine Anlenkstelle 12 mit dem Wandkörper 1 verbunden, und mit seinem anderen Ende mit Abstand vom Gelenk 43 an dem vom Sicherungsbalken 3 entfernten Ende des Unterarms 42 gelenkig verbunden.

In Figur 1 befinden sich beide Sicherungsbalken 3 in der abgesenkten Stellung, und Oberarm 41 und Unterarm 42 des Schwenkarms 4 befinden sich in einer im wesentlichen gestreckten Stellung.

In Figur 3 befindet sich der in der Darstellung rechte Sicherungsbalken 3 in der abgesenkten Stellung, und der in der Darstellung linke Sicherungsbalken 3 befindet sich in der vollständig angehobenen Stellung. Dazu ist der zugeordnete Schwenkarm 4 durch Ausfahren des ersten Hydraulikzylinders 5 um die Anlenkstelle 11 des Oberarms 41 am Wandkörper 1 nach oben geschwenkt. Der zweite Hydraulikzylinder 6 ist nicht ausgefahren, aber weil seine Anlenkstelle 13 am Wandkörper 1 von der Anlenkstelle 11 des Oberarms 41 am Wandkörper 1 versetzt angeordnet ist, wirkt der in seiner Länge unveränderte zweite Hydraulikzylinder 6 als Lenker, der aufgrund der Geometrie der Anordnung den Unterarm 42 mit Bezug auf den Oberarm 41 etwas beugt.

In Figur 5 ist der in der Darstellung linke Sicherungsbalken 3 in der abgesenkten Stellung, und der in der Darstellung rechte Sicherungsbalken 3 ist in der auf halbe Höhe angehobenen Stellung. Dies wird dadurch erreicht, dass der erste Hydraulikzylinder 5 nicht ausgefahren ist, wohingegen der zweite Hydraulikzylinder 6 ausgefahren ist und dadurch den Unterarm 42 des Schwenkarms 4 um das Gelenk 43 zwischen Oberarm 41 und Unterarm 42 geschwenkt hat, wohingegen der Oberarm 41 nicht geschwenkt worden ist.

Wie den Zeichnungen zu entnehmen ist, beruht die eben beschriebene Funktion des Schwenkarms 4 zum wahlweisen Anheben des zugeordneten Sicherungsbalkens 3 entweder in eine ganz angehobene Stellung (Figur 3) oder in eine halb angehobene Stellung (Figur 5) auf der Geometrie der Anordnung der beiden Hubzylinder 5 und 6 mit Bezug auf den Schwenkarm 4. Die Anlenkstelle 12 des ersten Hydraulikzylinders 5 am Wandkörper 1 befindet sich unterhalb der Verbindung dieses ersten Hydraulikzylinders 5 mit dem Oberarm 41, die sich wiederum unterhalb der Anlenkstelle 11 des Oberarms 41 am Wandkörper 1 befindet. Die Anlenkstelle 13 des zweiten Hydraulikzylinders 6 befindet sich im Bereich der Anlenkstelle 11 des Oberarms 41 am Wandkörper 1, ist davon jedoch etwas versetzt angeordnet. Beim dargestellten Ausführungsbeispiel befindet sich die Anlenkstelle 13 etwas oberhalb und etwas seitlich auswärts versetzt von der Anlenkstelle 11.

Beim Anheben des Sicherungsbalkens 3 sowohl in die vollständig angehobene Stellung als auch in die halb angehobene Stellung beschreibt der Sicherungsbalken 3 aufgrund der Schwenkbewegung des Schwenkarms 4 bzw. des Unterarms 42 eine bogenförmige Bahn, wobei der Bogen zunächst von der unteren Stellung des Sicherungsbalkens 3 seitlich auswärts und dann im oberen Bereich wieder seitlich einwärts führt. Durch entsprechende Bemessung der beiden Hydraulikzylinder 5 und 6 und des Oberarms 41 und des Unterarms 42 kann der Bewegungsbogen des Sicherungsbalkens 3 so eingestellt werden, dass sich der Sicherungsbalken 3 sowohl in der vollständig angehobenen Stellung als auch in der halb angehobenen Stellung um eine gewisse Distanz seitlich einwärts über die Ladepritschenkante hinaus bewegt, um das Ladegut klemmend zu erfassen.

Zwischen den Sicherungsbalken 3 und der Ladepritsche verlaufen, wie aus den Figuren 7, 9 und 11 ersichtlich ist, flexible Gurte 7, die mit gegenseitigen Abständen angeordnet sind und entlang der Längsseite des Transportwagens das Ladegut unterhalb des Sicherungsbalkens 3 sichern, wenn sich dieser in einer angehobenen Sicherungsstellung befindet, indem sie miteinander eine flexible Längsseitenwand bilden. Die Gurte 7 sind dabei mit ihren unteren Enden vorzugsweise jeweils unterhalb der Ladefläche befestigt. Beim Absenken des Sicherungsbalkens 3 in die abgesenkten Stellung bilden die Gurte jeweils flexible Schlaufen, die das Unterfahren der Ladefläche mit einem Ladefahrzeug nicht behindern.

Die Figuren 7 und 8 zeigen den vorderen Teil des Transportwagens in Seitenansicht und Frontansicht in voller Höhe mit Quaderballen Q beladen. Der Sicherungsbalken 3 befindet sich dabei in der vollständig angehobenen Stellung, und das Gatter 2 befindet sich dabei in der eingeklappten, also mit dem Wandkörper 1 fluchtenden Position.

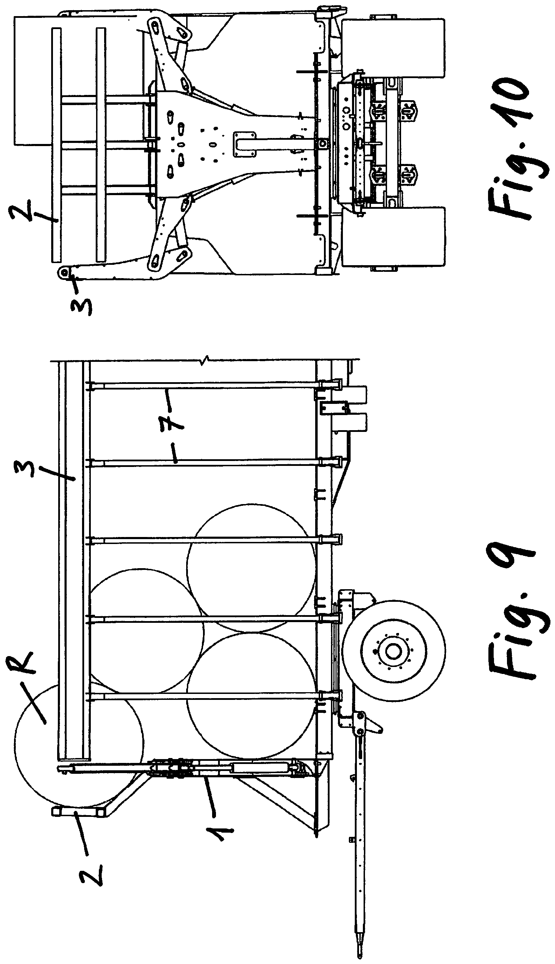

Die Figuren 9 und 10 zeigen den vorderen Teil des Transportwagens in Seitenansicht und in Frontansicht in voller Höhe mit Rundballen R beladen. Der Sicherungsbalken 3 befindet sich dabei wiederum in der vollständig angehobenen Stellung, und das Gatter 2 ist ausgeklappt, wodurch am vorderen und am hinteren Ende des Transportwagens jeweils ein zusätzlicher Rundballen R geladen werden kann, was ohne das klappbare Gatter nicht möglich wäre.

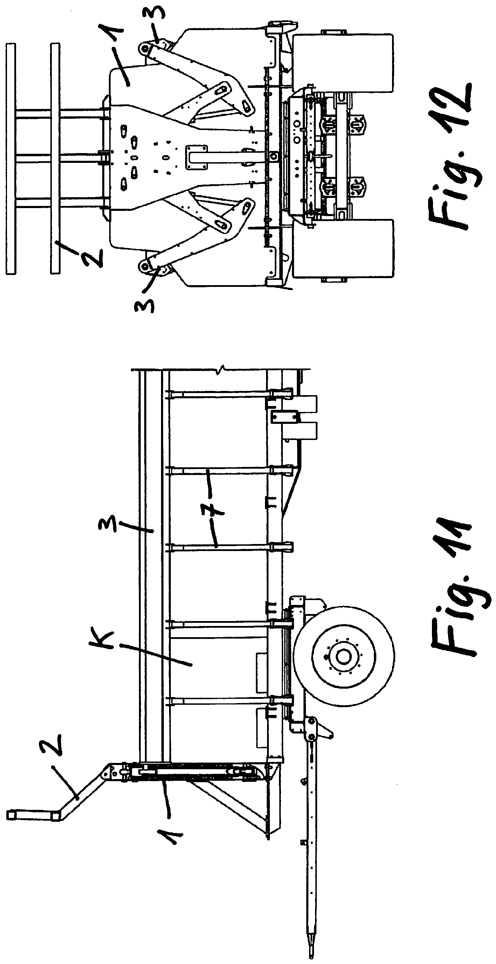

Die Figuren 11 und 12 zeigen den vorderen Teil des Transportwagens in Seitenansicht und in Frontansicht mit Kisten K beladen, und der Sicherungsbalken 3 ist auf halbe Höhe angehoben.

## Patentansprüche

1. Ladungssicherungsvorrichtung für landwirtschaftliche Transportwagen, die eine Ladepritsche, eine vordere Stirnwand und eine hintere Stirnwand sowie Seitenwandanordnungen an den Längsseitenwänden aufweisen, wobei mindestens eine Seitenwandanordnung durch einen sich über die Längsseite des Transportwagens erstreckenden starren Sicherungsbalken (3) und zwischen diesem und der Ladepritsche verlaufenden flexiblen Wandelementen wie beispielsweise Gurten (7) besteht, wobei der Sicherungsbalken (3) zwischen einer Ladestellung, in welcher der Sicherungsbalken (3) in eine Position unterhalb der Ladepritschenkante abgesenkt ist, und einer angehobenen Sicherungsstellung mittels eines Betätigungsmechanismus bewegbar ist, der an den beiden Stirnwänden des Transportwagens angeordnete, mit jeweils einem Ende des Sicherungsbalkens (3) verbundene Betätigungsmechanismen (4, 5, 6) aufweist,
**dadurch gekennzeichnet, dass** jeder Betätigungsmechanismus einen Schwenkarm (4) aufweist, der aus einem Oberarm (41), der in mit Bezug auf die volle Beladungshöhe etwa halber Höhe an einem Wandkörper (1) der jeweiligen Stirnwand angelenkt ist, und einem damit über ein Scharniergelenk (43) verbundenen Unterarm (42) besteht, dessen freies Ende mit dem Sicherungsbalken (3) gelenkig verbunden ist,
dass weiter ein erster Hydraulikzylinder (5) mit einem oberen Ende an einer zwischen der Anlenkstelle (11) des Oberarms (41) am Wandkörper (1) und dem Scharniergelenk (43) gelegenen Stelle mit dem Oberarm (41) gelenkig verbunden ist und mit einem unteren Ende an einer tiefer liegenden Anlenkstelle (12) mit dem Wandkörper (1) verbunden ist, und dass eine zweiter Hydraulikzylinder (6) mit einem unteren Ende an einer mit Bezug auf das Scharniergelenk (43) entgegen der Richtung zum Sicherungsbalken (3) versetzten Stelle gelenkig mit dem Unterarm (42) verbunden ist und mit einem oberen Ende an einer höher gelegenen Anlenkstelle (13) mit dem Wandkörper (1) verbunden ist.

2. Ladungssicherungsvorrichtung nach Anspruch 1, wobei der erste Hydraulikzylinder (5) und der zweite Hydraulikzylinder (6) wahlweise betätigt war sind, um den Sicherungsbalken (3) zwischen der abgesenkten Stellung und einer vollständig angehobenen Stellung bzw. einer in etwa halbe Höhe angehobenen Stellung zu schwenken.

3. Ladungssicherungsvorrichtung nach Anspruch 1 oder 2, wobei der bei Betätigung des jeweiligen Betätigungsmechanismus erzeugte bogenförmige Schwenkweg des Sicherungsbalkens (3) aus der abgesenkten Stellung in die vollständig oder auf eine etwa halbe Höhe angehobenen Stellung über eine gewisse seitliche Distanz über die Ladepritschenkante einwärts verlaufen kann.

4. Ladungssicherungsvorrichtung nach einem der Ansprüche 1 bis 3, wobei die Geometrie jedes Betätigungsmechanismus so angeordnet ist, dass der Oberarm (41 und der Unterarm (42) bei abgesenktem Sicherungsbalken (3) sich in nahezu gestreckter Stellung befinden und der Schwenkarm (4) sich von der Anlenkstelle (11) des Oberarms (41) am Wandkörper (1) schräg abwärts und seitwärts erstreckt.

5. Ladungssicherungsvorrichtung nach einem der Ansprüche 1 bis 4, wobei die Anlenkstelle (13) des zweiten Hydraulikzylinders (6) am Wandkörper (1) um eine kleine Distanz nach oben und seitwärts nach außen von der Anlenkstelle (11) des Oberarms (41) am Wandkörper (1) versetzt angeordnet ist.

6. Ladungssicherungsvorrichtung nach einem der Ansprüche 1 bis 5, wobei die vordere und die hintere Stirnwand des Transportwagens jeweils durch den sich nur über einen Teil der Stirnwandhöhe erstreckenden Wandkörper (1) und einen sich oben an den Wandkörper (1) anschließendes Wandelement gebildet ist, das als Gatter (2) ausgebildet sein kann und zwischen einer mit dem Wandkörper (1) fluchtenden eingeklappten Stellung und einer vorwärts bzw. rückwärts ausgeklappten Stellung bewegbar ist.

## Claims

1. A load securing device for agricultural transport wagons which have a loading platform, a front end wall and a rear end wall as well as side wall arrangements on the longitudinal side walls, wherein at least one side wall arrangement comprises a rigid securing beam (3) extending over the longitudinal side of the transport wagon and flexible wall elements such as belts (7) extending between said securing beam and the loading platform, the securing beam (3) being movable between a loading position, in which the securing beam (3) is lowered into a position below the edge of the loading platform, and a raised securing position by means of an actuating mechanism which has actuating mechanisms (4, 5, 6) arranged on the two end walls of the transport wagon and connected to one end of the securing beam (3) in each case,
**characterized in that** each actuating mechanism has a pivoting arm (4), which consists of an upper arm (41), which is articulated to a wall body (1) of the respective end wall at approximately half height with respect to the full loading height, and a lower arm (42) connected thereto via a hinge (43), the free end of which lower arm is articulately connected to the securing beam (3),
that further a first hydraulic cylinder (5) is articulately connected at its upper end to the upper arm (41) at a point between the articulation point (11) of the upper arm (41) on the wall body (1) and the hinge (43), and is connected at its lower end to the wall body (1) at a lower articulation point (12), and **in that** a second hydraulic cylinder (6) is articulately connected at its lower end to the lower arm (42) at a point that is offset with respect to the hinge (43) in the direction opposite to the securing beam (3), and is connected at its upper end to the wall body (1) at a higher articulation point (13).

2. The load securing device of claim 1, wherein the first hydraulic cylinder (5) and the second hydraulic cylinder (6) are selectively actuatable to pivot the securing beam (3) between the lowered position and a fully raised position or a position raised to approximately half height.

3. The load securing device of claim 1 or 2, wherein the arcuate pivoting path of the securing beam (3) formed upon actuation of the respective actuating mechanism from the lowered position to the fully raised position or to a position raised to approximately half the height can extend inwards over a certain lateral distance over the edge of the loading platform.

4. The load securing device of any of claims 1 to 3, wherein the geometry of each actuating mechanism is arranged such that the upper arm (41) and the lower arm (42) are in an almost extended position when the securing beam (3) has been lowered, and the pivot arm (4) extends obliquely downwards and sideways from the articulation point (11) of the upper arm (41) on the wall body (1).

5. The load securing device of any of claims 1 to 4, wherein the articulation point (13) of the second hydraulic cylinder (6) on the wall body (1) is offset upwards and laterally outwards by a small distance from the articulation point (11) of the upper arm (41) on the wall body (1).

6. The load securing device of any of claims 1 to 5, wherein the front and rear end walls of the transport wagon are each formed by the wall body (1), which extends only over part of the height of the end wall, and a wall element which adjoins the wall body (1) at the top, can be designed as a gate (2) and is movable between a folded-in position aligned with the wall body (1) and a forwardly or rearwardly folded-out position.

## Revendications

1. Dispositif d'arrimage de charge pour chariot de transport agricole, qui présente une plateforme de chargement, une paroi frontale avant et une paroi frontale arrière ainsi que des agencements de panneaux latéraux sur les panneaux latéraux longitudinaux, sachant qu'au moins un agencement de panneaux latéraux est composé d'une traverse de sécurité rigide (3) s'étendant sur le côté longitudinal du chariot de transport et d'éléments de panneau flexibles se déployant entre celle-ci et la plateforme de chargement, comme par exemple des sangles (7), sachant que la traverse de sécurité (3) est mobile entre une position de chargement, dans laquelle la traverse de sécurité (3) est abaissée dans une position au-dessous du bord de plateforme de chargement, et une position de sécurité relevée au moyen d'un mécanisme d'actionnement qui présente des mécanismes d'actionnement (4, 5, 6) disposés sur les deux parois frontales du chariot de transport et reliés respectivement à une extrémité de la traverse de sécurité (3),
**caractérisé en ce que** chaque mécanisme d'actionnement comprend un bras pivotant (4), qui est composé d'un bras supérieur (41), qui est articulé environ à mi-hauteur par rapport à la hauteur de chargement totale sur un corps de paroi (1) de la paroi frontale respective, et d'un bras inférieur (42) relié à celui-ci par une articulation à charnière (43) dont l'extrémité libre est reliée à la traverse de sécurité (3) de manière articulée,
**en ce que** par ailleurs un premier vérin hydraulique (5) est relié de manière articulée au bras supérieur (41) par une extrémité supérieure sur une zone située entre la zone d'articulation (11) du bras supérieur (41) sur le corps de paroi (1) et l'articulation à charnière (43) et est relié au corps de paroi (1) par une extrémité inférieure sur une zone d'articulation (12) située plus bas et **en ce qu'**un second vérin hydraulique (6) est relié de manière articulée au bras inférieur (42) par une extrémité inférieure sur une zone décalée par rapport à l'articulation à charnière (43) dans la direction inverse à la traverse de sécurité (3) et est relié au corps de paroi (1) par une extrémité supérieure sur une zone d'articulation (13).

2. Dispositif d'arrimage de charge selon la revendication 1, sachant que le premier vérin hydraulique (5) et le second vérin hydraulique (6) sont actionnés au choix, afin de faire pivoter la traverse de sécurité (3) entre la position abaissée et une position complètement relevée ou une position relevée environ à la mi-hauteur.

3. Dispositif d'arrimage de charge selon la revendication 1 ou la 2, sachant que la trajectoire de pivotement de la traverse de sécurité (3) en arc générée à l'actionnement du mécanisme d'actionnement respectif, peut s'étendre vers l'intérieur à partir de la position abaissée dans la position complètement relevée ou dans une position relevée environ à la mi-hauteursur une certaine distance latérale au-dessus du bord de la plateforme de chargement.

4. Dispositif d'arrimage de charge selon une quelconque des revendications 1 à 3, sachant que la géométrie de chaque mécanisme d'actionnement est agencée de sorte que le bras supérieur (41) et le bras inférieur (42) se trouvent en position pratiquement déployée avec la traverse de sécurité (3) abaissée et que le bras pivotant (4) s'étend obliquement vers le bas et latéralement à partir de la zone d'articulation (11) du bras supérieur (41) sur le corps de paroi (1).

5. Dispositif d'arrimage de charge selon une quelconque des revendications 1 à 4, sachant que la zone d'articulation (13) du second vérin hydraulique (6) sur le corps de paroi (1) est agencée sur le corps de paroi (1) de manière décalée d'une petite distance vers le haut et latéralement vers l'extérieur à partir de la zone d'articulation (11) du bras supérieur (41).

6. Dispositif d'arrimage de charge selon une quelconque des revendications 1 à 5, sachant que la paroi frontale avant et celle arrière du chariot de transport sont formées respectivement par le corps de paroi (1) s'étendant uniquement sur une partie de la hauteur de paroi frontale et par un élément de paroi se raccordant en haut au corps de paroi (1), qui peut être constitué sous forme de grille (2) et est mobile entre une position repliée à fleur avec le corps de paroi (1) et une position déployée vers l'avant ou vers l'arrière.
